**Europäisches Patentamt**

**European Patent Office**

**Office européen des brevets**

(11) Publication number: **0 086 234**
**A1**

## EUROPEAN PATENT APPLICATION

published in accordance with Art. 158(3) EPC

(21) Application number: **82901431.5**

(22) Date of filing: **14.05.82**

Data of the international application taken as a basis:

(86) International application number:
**PCT/JP 82/00167**

(87) International publication number:
**WO 82/04140 (25.11.82 82/28)**

(51) Int. Cl.³: **G 05 D 3/00**

(30) Priority: **14.05.81 JP 72829/81**

(43) Date of publication of application: **24.08.83**
**Bulletin 83/34**

(84) Designated Contracting States: **DE FR GB**

(71) Applicant: **Fanuc Ltd, 5-1, Asahigaoka, 3-chome, Hino-shi, Tokyo 191 (JP)**

(72) Inventor: **OYAMA, Shigeaki, 939-82, Katakura-cho Hachioji-shi, Tokyo 192 (JP)**
Inventor: **ISHIDA, Hiroshi, 2-2-73, Matsubara-cho Hamura-machi, Nishitama-gun Tokyo 190-11 (JP)**
Inventor: **FUJIOKA, Yoshiki, Green-town 3-306, 3-1293-10 Tateno, Higashiyamato-shi Tokyo 189 (JP)**
Inventor: **NAKAMURA, Kousei, 1-2-8, Asahigaoka Hino-shi, Tokyo 191 (JP)**
inventor: **HAYASHI, Yoshiyuki, Sekishin-sou 5 3-11-4, Tamadaira, Hino-shi Tokyo 191 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **SYNCHRONOUS OPERATION DEVICE.**

(57) Synchronous operation device which operates a spindle motor (SPM) and a feed motor (ZMT) synchronously with each other during tapping work. A pulse generator (PG) generating a pulse (Sp) for each predetermined amount of rotation of the spindle motor (SPM) is provided in the spindle motor, the pulse is input to a pulse distributor (PDC) driving the feed motor so that the pulse distributor can calculate the pulse distribution and drive the feed motor in accordance with the distribution pulses (Zp) obtained by the pulse distribution calculation during tapping work.

EP 0 086 234 A1

0086234

**TITLE MODIFIED**

see front page

APPARATUS FOR SYNCHRONOUS OPERATION

Technical Field

This invention relates to an apparatus for synchronous operation in tapping machining for operating a spindle motor and feed motor synchronously. More particularly, the invention relates to an apparatus for synchronous operation in tapping machining, wherein a pulse generator is mounted on a spindle motor for generating a pulse each time the spindle motor rotates by a predetermined amount, the pulses are applied to a pulse distributor for driving a feed motor, the pulse distributor executes a pulse distribution operation on the basis of the pulses, and the feed motor is driven on the basis of distributed pulses obtained as a result of the pulse distribution operation.

Background Art

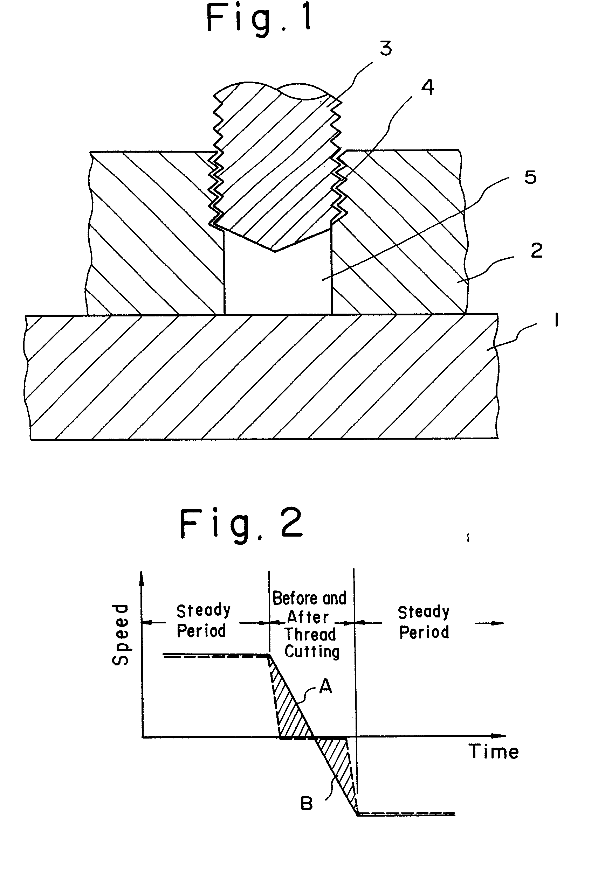

Tapping machining performed by a machining center of the like generally is carried out in the following manner, as shown in Fig. 1. Specifically, a spindle on which a screw tap 3 is mounted is driven into rotation. Under such condition, a Z-axis feed motor is driven to move the screw tap 3 in the direction of a workpiece 2 placed on a table 1, whereby the screw tap is caused to approach the entrance to a bore 5 already formed in the workpiece. Thereafter, threads 4 will be cut into the inner wall of the bore if the Z-axis motor is driven to insert the screw tap 3 into the bore 5 while the spindle continues to be rotated. Tapping machining is completed when, after cutting a screw of a predetermined length, the feed motor and spindle rotation are reversed and the screw tap 3 is withdrawn.

Fig. 2 shows speed-time characteristics for the rotational speed of the feed motor and the rotational speed of the spindle before and after the completion of the thread cutting operation. In the drawing, the solid line indicates the spindle rotational speed - time characteristic, and the dashed line the feed motor rotational speed - time characteristic. It will be apparent from Fig. 2 that the feed motor and spindle rotate in synchronism with each other when conditions are steady, but that rotation is asynchronous before and after the completion of thread cutting. Immediately before the completion of thread cutting, therefore, the screw tap is moved excessively in the axial direction over a length corresponding to the area A, giving rise to an axially directed machining error. Immediately after the spindle is reversed, on the other hand, the screw tap 3 is moved excessively in the direction of withdrawal over a length corresponding to the area B. When the screw tap 3 is withdrawn, the screw threads will not be defaced if the relation A=B is satisfied, but they will be if A≠B holds. Accordingly, the prior-art apparatus uses a tool referred to as a tapmatic for absorbing a machining error in the direction of screw depth and for preventing the defacement of the screw threads. However, while the method which relies upon the tapmatic is effective for screws of a large diameter, the method is unsatisfactory for screws of a small diameter because the screw threads tend to be defaced in such case.

Accordingly, an object of the present invention is to provide an apparatus for synchronous operation, which apparatus has a simple construction and enables the rotational speeds of a feed motor and spindle to be synchronized.

Disclosure of the Invention

The present invention discloses an apparatus for synchronous operation in tapping machining for operating a spindle motor and feed motor in synchronism. In the apparatus for synchronous operation, a pulse generator is mounted on a spindle motor for generating a pulse each time the spindle motor rotates by a predetermined amount, the pulses generated by the pulse generator are applied to a pulse distributor for driving a feed motor, the pulse distributor executes a pulse distribution operation on the basis of the pulses, and the feed motor is driven on the basis of distributed pulses obtained as a result of the pulse distribution operation. In accordance with the present invention, the feed motor and spindle motor can be rotated synchronously, enabling the elimination of a machining error in the direction of screw depth as well as defacement of the screw threads.

## Brief Description of the Drawings

Fig. 1 is an explanatory view for explaining tapping machining; Fig. 2 shows speed-time characteristics for a feed motor and spindle motor according to the prior art; Fig. 3 is a block diagram embodying the present invention; Fig. 4 is a block diagram of a pulse distributor; Fig. 5 is an explanatory view showing connections among a spindle, pulse generator and spindle motor; and Fig. 6 is a speed-time characteristic for a feed motor and spindle motor according to the present invention.

## Best Mode for Carrying Out the Invention

An embodiment of the present invention will now be described in detail with reference to the drawings.

Let the feed speed at which the table 1, i.e, the workpiece 2 (Fig. 1), is raised or lowered be designated by $f_m$ (mm/min), let the rotational speed of the spindle, namely the rotational speed of the tap 3, be $N_s$ (rpm), and let the pitch of the screw 4 be P. If the following equation relating these quantities, namely:

$$F_m = N_s \cdot P \quad \ldots \ldots \ldots (1)$$

can be satisfied at all times, then the tap 3 may be thrust into the bore 5 while cutting the threads without undergoing elongation or contraction and, when rotated in the reverse direction, may be withdrawn from the bore also without experiencing elongation and contraction. In other words, if the feed motor and spindle motor are rotated synchronously in such a manner that Eq. (1) is satisfied at all times, then a machining error in the direction of screw thickness and defacement of the screw threads will be eliminated.

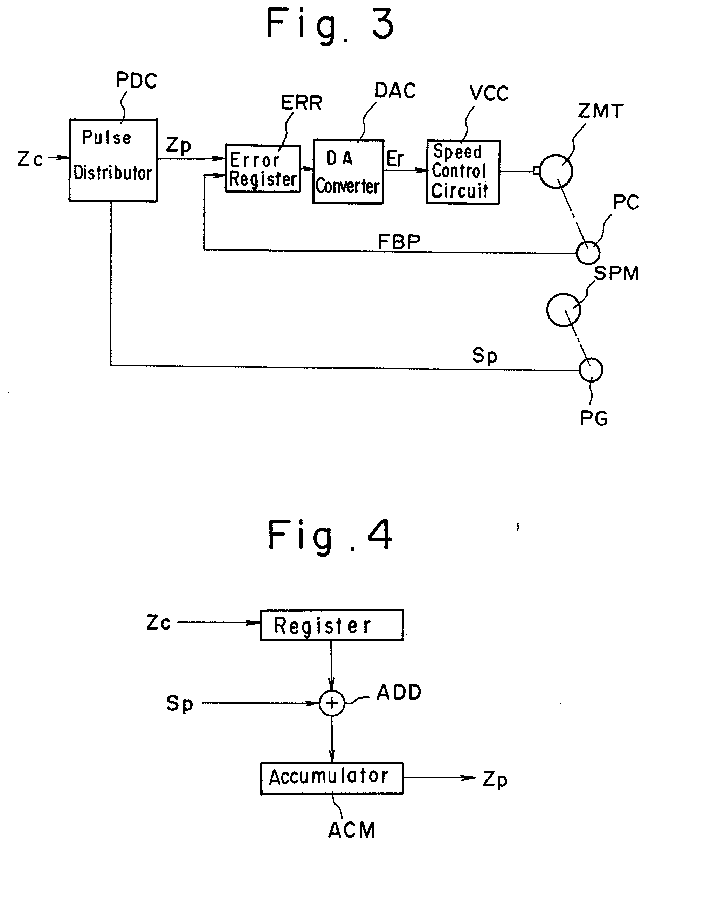

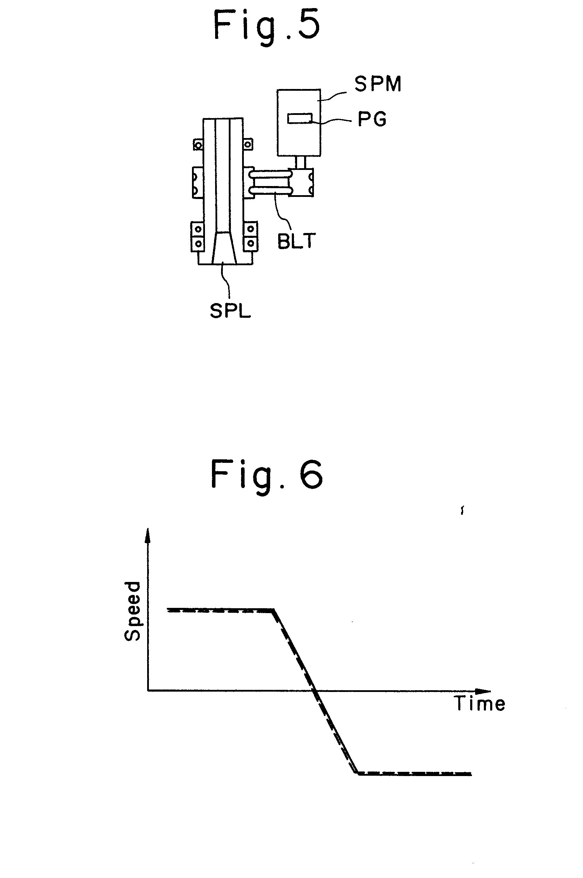

Fig. 3 is a block diagram embodying the present invention, Fig. 4 is a block diagram of a pulse distributor, Fig. 5 is an explanatory view showing connections among a spindle, pulse generator and spindle motor, and Fig. 6 is a rotational speed-time characteristic for a spindle motor and feed motor according to the present invention.

In Fig. 3, PDC represents a pulse distributor for generating distributed pulses which drive a Z-axis feed motor. The pulse distributor PDC receives, as input signals, a Z-axis move command $Z_c$ and a pulse train $S_p$, described below, and performs a well-known pulse distribution operation, such as a pulse distribution operation using a DDA (digital differential analyzer). As shown in Fig. 4, the pulse distributor PDC is constructed of a register RG for storing the move command $Z_c$, an adder ADD, and an accumulator ACM. The adder ADD adds the content of the register RG and of the accumulator ACM each time a pulse $S_p$ is generated, and plants the result of the addition operation in the accumulator ACM. Assuming that the frequency of the pulses $S_p$ is $f$ and that the accumulator has n-number of bits (capacity 2n), the pulse frequency $f_c$ of the overflow pulses (the distributed pulses $Z_p$) generated by the accumulator as a result of the foregoing addition operation will be given by:

$$f_c = Z_c \cdot f/2n \quad \ldots \ldots \quad (2)$$

Returning to Fig. 3, ERR represents an error register for counting up or counting down, in accordance with the direction of movement, the distributed pulses $Z_p$ as well as feedback pulses FBP each of which is generated whenever a feed motor, described later, rotates by a predetermined amount. By way of example, if the direction of movement along the Z-axis is the positive direction, then the content of the error register ERR is counted up each time a distributed pulse $Z_p$ is generated, and is counted down each time a feedback pulse FBP is generated. Conversely, if the direction of movement is the negative direction, then the content of the error register is counted down each time a distributed pulse $Z_p$ is generated, and counted up each time a feedback pulse FBP is produced. Thus, what is stored in the error register ERR is the difference between the number of distributed pulses $Z_p$ and the number of feedback pulses FBP. DAC represents a DA converter for generating an analog positional offset voltage $E_r$ proportional to the content of the error register ERR. Designated at VCC is a speed control circuit. ZMT denotes a Z-axis feed motor, and PC a pulse coder for generating a single feedback pulse FBP each time the feed motor ZMT rotates by a predetermined amount. SPM represents a spindle motor, and PG a pulse generator for generating a pulse $S_p$ each time the spindle motor SPM rotates by a predetermined amount. It should be noted that the pulse generator PG is incorporated within the frame of the spindle motor SPM, as shown in Fig. 5. In addition, a spindle SPL is rotated by the spindle motor SPM via, e.g., a belt BLT (or gears if desired).

When a numerical value $Z_c$ indicative of the Z-axis move command is applied to the pulse distributor PDC in tapping machining, the numerical value is stored in the register RG (Fig. 4). If the spindle motor SPM is rotating at this time, the pulse generator PG generates a pulse train S each time the motor rotates by a predetermined amount. The pulse distributor PDC executes the abovementioned pulse distribution operation each time a pulse $S_p$ is generated, producing distributed pulses $Z_p$ of the frequency $f_c$ indicated by Eq. (2) to drive the feed motor ZMT into rotation. As a result, the feed motor ZMT rotates at a speed proportional to the frequency $f_c$. More specifically, the rotational speed of the feed motor ZMT is proportional to the rotational speed of the spindle motor SPM. Accordingly, if a proportional constant is so decided as to satisfy Eq. (1), the speed-time characteristics of the feed motor ZMT and spindle motor SPM can be brought into agreement, as illustrated in Fig. 6. In other words, the two motors can be rotated in complete

0086234

synchronism.

<u>Industrial Applicability</u>

In accordance with the present invention, a feed motor and spindle motor can be rotated in synchronism. The invention is therefore well-suited for tapping work in which a machining error in the direction of screw thickness can be eliminated, as well as defacement of the screw threads.

0086234

CLAIMS

1.    An apparatus for synchronous operation in tapping machining for operating a spindle motor and feed motor in synchronism, wherein a pulse generator is mounted on a spindle motor for generating a pulse each time the spindle motor rotates by a predetermined amount, said pulses are applied to a pulse distributor for driving a feed motor, the pulse distributor executes a pulse distribution operation on the basis of said pulses, and the feed motor is driven on the basis of distributed pulses obtained as a result of the pulse distribution operation.

2.    An apparatus for synchronous operation according to claim 1, characterized in that said pulse generator is mounted on said spindle motor within a frame of the spindle motor.

# Fig. 1

# Fig. 2

# Fig. 3

# Fig. 4

# Fig.5

SPM

PG

BLT

SPL

# Fig. 6

Speed

Time

# INTERNATIONAL SEARCH REPORT

International Application No. PCT/JP82/00267

## I. CLASSIFICATION OF SUBJECT MATTER (if several classification symbols apply, indicate all) [3]

According to International Patent Classification (IPC) or to both National Classification and IPC

Int. Cl.[3]  G05D 3/00

## II. FIELDS SEARCHED

### Minimum Documentation Searched [4]

| Classification System | Classification Symbols |
|---|---|
| I P C | G05D 3/00, G05B 19/00, G05D 5/00, H02P 5/00 |

| | Documentation Searched other than Minimum Documentation to the Extent that such Documents are Included in the Fields Searched [5] |
|---|---|
| | Jitsuyo Shinan Koho     1965 – 1982 |
| | Kokai Jitsuyo Shinan Koho     1971 – 1982 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| X | JP,A, 56-33249 (Fujitsu Fanuc Ltd.) 3. April. 1981 (3. 4. 81) | 1 – 2 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| August 9, 1982 (09.08.82) | August 16, 1982 (16.08.82) |

| International Searching Authority [1] | Signature of Authorized Officer [20] |
|---|---|
| Japanese Patent Office | |

Form PCT/ISA/210 (second sheet) (October 1981)